Europäisches Patentamt

(19) European Patent Office

Office européen des brevets

(11) Publication number: **0 291 115 B1**

(12) **EUROPEAN PATENT SPECIFICATION**

(45) Date of publication of patent specification :
17.07.91 Bulletin 91/29

(51) Int. Cl.⁵: **F23J 15/00, F28F 19/00**

(21) Application number: 88200851.9

(22) Date of filing : 29.04.88

(54) Method and apparatus for cooling a hot product gas.

(30) Priority : 14.05.87 GB 8711359

(43) Date of publication of application :
17.11.88 Bulletin 88/46

(45) Publication of the grant of the patent :
17.07.91 Bulletin 91/29

(84) Designated Contracting States :
DE GB IT NL

(56) References cited :
EP-A- 0 171 351
DE-A- 3 242 531
US-A- 3 380 513

(73) Proprietor : SHELL INTERNATIONALE
RESEARCH MAATSCHAPPIJ B.V.
Carel van Bylandtlaan 30
NL-2596 HR Den Haag (NL)

(72) Inventor : van der Burgt, Maarten Johannes
Carel van Bylandtlaan 30
NL 2596 HR The Hague (NL)

(74) Representative : Aalbers, Onno et al
P.O. Box 302
NL-2501 CH The Hague (NL)

## Description

The invention relates to a method and apparatus for cooling a hot product gas containing sticky particles which lose their stickiness upon cooling.

The sticky particles in the hot product gas will cause problems in the plant where the product gas is further processed, since undesirable deposits of the particles on, for example, walls, valves or outlets will adversely affect the process. Moreover, such deposits are very hard to remove.

The hot product gas may be obtained from the partial combustion of a carbonaceous material, in particular a finely divided solid carbon containing fuel, in which case the product gas will have a temperature in the range of 1000°C to 1800°C. The sticky particles may be partly or completely in the molten state ; they may comprise metals, salts or ashes, and, in general, these particles lose their stickiness at a temperature below about 800°C.

It is an object of the invention to provide a relatively simple apparatus and method for keeping hot surfaces clean from sticky particles.

The method of the invention therefore provides a method for cooling a hot product gas containing sticky particles which lose their stickiness upon cooling, comprising the steps of passing the hot product gas from a reactor along at least one cooling section consisting of a quench wall provided with a porous wall region, an inlet and an outlet for coolant and a flexible means adjacent to the inner side of the quench wall and its rims being sealingly connected therewith ; supplying a coolant through the inlet and the porous wall region into the space formed by the quench wall and the flexible means ; moisturizing the flexible means with the coolant, vaporizing the coolant thus bulging the flexible means and discharging the vaporized coolant through the outlet so that the flexible means collapses to its start position and repeating these steps.

The invention also provides an apparatus for cooling a hot product gas containing sticky particles which lose their stickiness upon cooling, said apparatus comprising a cooling section consisting of a quench wall, an inlet and outlet for coolant, means for supplying coolant through the inlet and means for discharging the coolant through the outlet, characterized in that the inlet and outlet for coolant are in the quench wall, that a part of said quench wall is porous and that said quench wall is supplied with a flexible means adjacent to the inner side thereof, the rims of said flexible means being sealingly connected therewith.

In this manner heat of the product gas is used efficiently for generating the movement of the flexible means.

It is remarked that EP-A-0,171,351 discloses an apparatus for cooling a hot product gas containing sticky particles which lose their stickiness upon cooling, said apparatus comprising a cooling section consisting of a quench wall, an inlet and outlet for coolant, means for supplying coolant through the inlet and means for discharging the coolant through the outlet. However, the specific arrangement of the invention has not been disclosed.

The invention will now be described by way of example in more detail by reference to the accompanying drawings, in which :

fig. 1 represents a longitudinal section (partially) of an apparatus for cooling hot product gas according to the present invention ; and

fig. 2 represents an axial cross-section of an advantageous embodiment of the present invention.

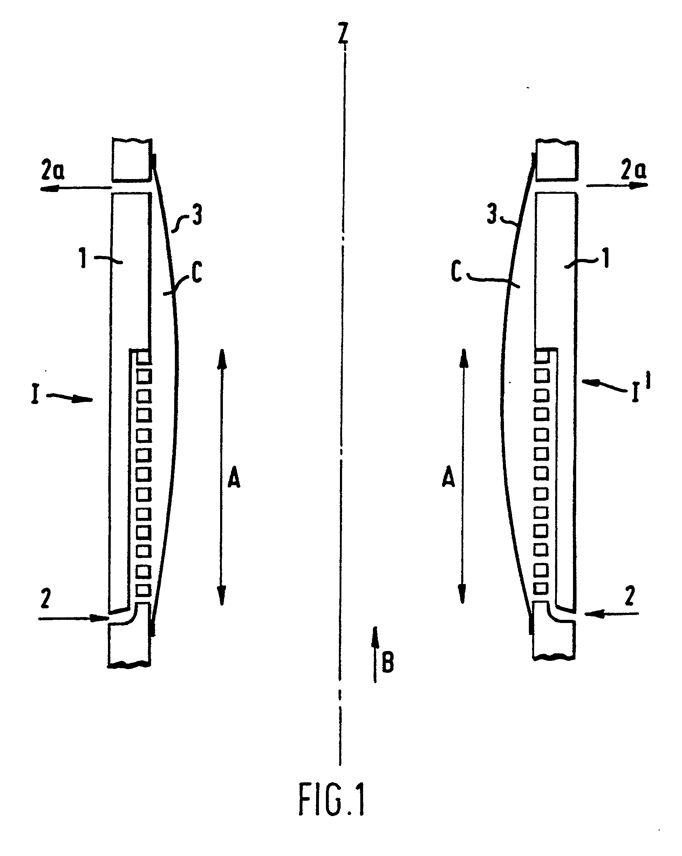

Referring now to fig. 1, the cooling apparatus of the invention comprises a cooling section I consisting of a quench wall 1. The cooling apparatus may for example be of tubular shape and may comprise a second cooling section $I^1$. In cooling section $I^1$ the same reference numeral have been used as in cooling section I. The reference numeral Z represents the longitudinal axis of the said cooling apparatus. The said cooling apparatus is connected in any suitable manner to a reactor in which hot product gas is produced (not shown for reasons of clarity). For reasons of clarity only part of the tubular cooling apparatus is represented. The quench walls 1 are provided with inlets 2 for cooling medium (for example water) and outlets 2a for cooling medium after its vaporization.

A part of the quench wall 1 is porous and is represented as the wall region A.

Hot product gas B from the reactor (not shown for reasons of clarity) flows along the inner side of the cooling apparatus.

A thin flexible means 3 is sealingly connected at its rims in any way suitable for the purpose (for example by a suitable mechanical connection or by welding) to the inner side of the quench wall 1 in such a manner that in its start position the flexible means 3 rests against the interior of the wall 1. It will be clear that the flexible means 3 will be heated by the hot product gas.

In fig. 1 the flexible means 3 has been represented in a "bulged" position (which is not the rest position). In its rest position the flexible means 3 may rest against a stiff support connected to the porous wall (not shown for reasons of clarity). Advantageously, the flexible means 3 is a membrane.

More advantageously, the membrane can have a curved shape, the hollow side of which faces the porous wall.

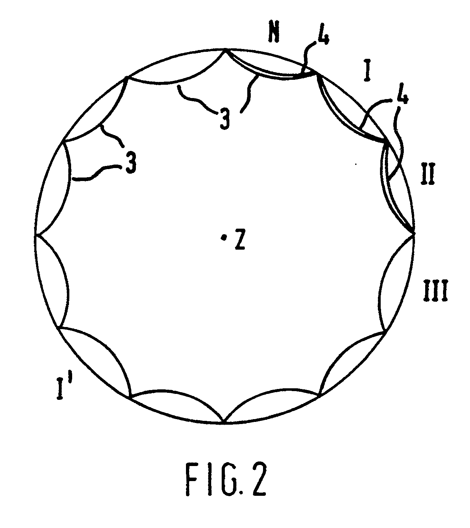

Referring to fig. 2 a tubular cooling apparatus is represented, comprising a plurality of cooling sections I, II, III...$I^1$...N located one next to another.

The same reference numerals as in fig. 1 have been used. For reasons of clarity the respective porous walls, the inlets and outlets for coolant have not been represented. The reference numerals 4 shown in this figure represent the stiff supports connected to the porous wall. In these supports the respective coolant inlets and outlets are provided (not shown for reasons of clarity).

It will be appreciated that in advantageous embodiments of the present invention the cooling apparatus comprises a plurality of cooling sections located circumferentially and/or located one above another (in a longitudinal direction).

The operation of the apparatus of the invention is as follows : coolant, for example water, is supplied in any suitable manner through the inlet 2 and the porous wall region A into the space C formed between the wall and the flexible means.

Thus, the hot flexible means 3 is moisturized with water, which upon contact with the flexible means vaporizes and makes the flexible means bulge. This bulging eventually makes the flexible means 3 lift from the wall 1 in such a way that the (steam) outlet 2a is cleared. When this occurs the pressure in the space C decreases and the flexible means will collapse to the rest position after which the steps described in the foregoing are repeated. In this manner the quench wall is "breathing" and sticking of ash (slag) particles on the inner wall side thereof is avoided.

It will be appreciated that for the porous wall various materials can be chosen, partly dependent on the type of coolant employed.

The porous wall may, for example, consist of sintered metal or ceramic material or a metal sheet provided with small holes.

## Claims

1. A method for cooling a hot product gas containing sticky particles which lose their stickiness upon cooling comprising the steps of passing the hot product gas from a reactor along at least one cooling section consisting of a quench wall provided with a porous wall region, an inlet and an outlet for coolant and a flexible means adjacent to the inner side of the quench wall and its rims being sealingly connected therewith ; supplying a coolant through the inlet and the porous wall region into the space formed by the quench wall and the flexible means ; moisturizing the flexible means with the coolant, vaporizing the coolant thus bulging the flexible means and discharging the vaporized coolant through the outlet so that the flexible means collapses to its start position and repeating these steps.

2. The method as claimed in claim 1 characterized in that the hot product gas is passed along a plurality of cooling sections.

3. The method as claimed in claims 1 or 2 characterized in that the coolant is water.

4. The method as claimed in any one of claims 1-3 characterized in that the hot product gas is obtained by the partial combustion of finely divided solid carbon-containing fuel.

5. An apparatus for cooling a hot product gas containing sticky particles which lose their stickiness upon cooling, said apparatus comprising a cooling section consisting of a quench wall, an inlet and outlet for coolant, means for supplying coolant through the inlet and means for discharging the coolant through the outlet, characterized in that the inlet and outlet for coolant are in the quench wall, that a part of said quench wall is porous and that said quench wall is supplied with a flexible means adjacent to the inner side thereof, the rims of said flexible means being sealingly connected therewith.

6. The apparatus as claimed in claim 5 characterized by a plurality of cooling sections.

7. The apparatus as claimed in claim 6 characterized in that the cooling sections are located one next to another.

8. The apparatus as claimed in claim 6 or 7 characterized in that the cooling sections are located one above another (in a longitudinal direction).

9. The apparatus as claimed in any one of claims 5-8 characterized in that the flexible means is a membrane.

10. The apparatus as claimed in any one of claims 5-9 characterized in that the flexible means has a curved shape.

## Patentansprüche

1. Ein Verfahren zum Abkühlen eines heißen Produktgases, enthaltend klebrige Teilchen, welche beim Abkühlen ihre Klebrigkeit verlieren, umfassend die folgenden Verfahrensstufen : Leiten des heißen Produktgases aus einem Reaktor entlang mindestens eines Kühlabschnittes, bestehend aus einer Abschreckwand, die mit einem porösen Wandabschnitt, einem Ein- und einem Auslaß für das Kühlmittel und einer flexiblen Einrichtung versehen ist, welche an der Innenseite der Abschreckwand anliegt und deren Ränder dichtend damit verbunden sind, Einspeisen eines Kühlmittels durch den Einlaß und den porösen Wandabschnitt in den durch die Abschreckwand und die flexible Einrichtung gebildeten Raum ; Befeuchten der flexiblen Einrichtung mit dem Kühlmittel, Verdampfen des Kühlmittels, wodurch die flexible Einrichtung ausgebaucht wird, und Abziehen des verdampften Kühlmittels durch den Auslaß, so daß die flexible Einrichtung wieder in die Ausgangsstellung zurückfällt, und Wiederholung dieser Schritte.

2. Das Verfahren wie in Anspruch 1 beansprucht, dadurch gekennzeichnet, daß man das heiße Produktgas an mehreren Kühlabschnitten entlang leitet.

3.Das Verfahren wie in den Ansprüchen 1 oder 2 beansprucht, dadurch gekennzeichnet, daß das Kühlmittel Wasser ist.

4. Das Verfahren wie in einem der Ansprüche 1 bis 3 beansprucht, dadurch gekennzeichnet, daß das heiße Produktgas durch Teilverbrennung von feinverteilten festen Kohlenstoff enthaltendem Brennstoff erhalten wird.

5. Eine Vorrichtung zum Abkühlen eines heißen Produktgases, enthaltend klebrige Teilchen, welche ihre Klebrigkeit beim Abkühlen verlieren, wobei die genannte Vorrichtung einen Kühlabschnitt umfaßt, bestehend aus einer Abschreckwand, einem Einlaß und einem Auslaß für das Kühlmittel, einer Einrichtung zum Einspeisen des Kühlmittels durch den Einlaß und einer Einrichtung zum Abziehen des Kühlmittels durch den Auslaß, dadurch gekennzeichnet, daß der Ein- und Auslaß für das Kühlmittel sich in der Abschreckwand befinden, daß ein Teil der genannten Abschreckwand porös ist und das die genannte Abschreckwand mit einer flexiblen Einrichtung versehen ist, die an deren Innenseite anliegt, wobei die Ränder der genannten flexiblen Einrichtung dichtend damit verbunden ist.

6. Die Vorrichtung wie in Anspruch 5 beansprucht, gekennzeichnet durch eine Mehrzahl von Kühlabschnitten.

7. Die Vorrichtung wie in Anspruch 6 beansprucht, dadurch gekennzeichnet, daß die Kühlabschnitte nebeneinander angeordnet sind.

8. Die Vorrichtung wie in den Ansprüchen 6 oder 7 beansprucht, dadurch gekennzeichnet, daß die Kühlabschnitte übereinander angeordnet sind (in Längsrichtung).

9. Die Vorrichtung wie in einem der Ansprüche 5 bis 8 beansprucht, dadurch gekennzeichnet, daß die flexible Einrichtung eine Membran ist.

10. Die Vorrichtung wie in einem der Ansprüche 5 bis 9 beansprucht, dadurch gekennzeichnet, daß die flexible Einrichtung eine gebogene Form aufweist.

**Revendications**

1. Une méthode pour refroidir un gaz chaud contenant des particules poisseuses qui perdent leur caractère poisseux lors du refroidissement, comprenant les étapes selon lesquelles on fait passer le gaz chaud à partir d'un réacteur le long d'au moins une section de refroidissement consistant en une paroi de refroidissement comportant une région poreuse, une entrée et une sortie pour un fluide de refroidissement et un élément flexible adjacent au côté intérieur de la paroi de refroidissement et dont les bords sont reliés de manière étanche à la paroi ; on fait arriver un fluide de refroidissement par l'entrée et à travers la région poreuse de la paroi dans l'espace formé par la paroi de refroidissement et l'élément flexible ; on mouille l'élément flexible avec le fluide de refroidissement, vaporisant le fluide de refroidissement et gonflant ainsi l'élément flexible et on décharge le fluide de refroidissement vaporisé par la sortie, de sorte que l'élément flexible s'affaisse à sa position de départ, et on répète ces étapes.

2. Une méthode selon la revendication 1, caractérisée en ce que le gaz chaud est passé le long de plusieurs sections de refroidissement.

3. Une méthode selon les revendications 1 ou 2, caractérisée en ce que le fluide de refroidissement est de l'eau.

4. Une méthode selon l'une quelconque des revendications 1-3, caractérisée en ce que le gaz chaud est obtenu par la combustion partielle d'un combustible carboné solide finement divisé.

5. Un dispositif pour refroidir un gaz chaud contenant des particules poisseuses qui perdent leur caractère poisseux lors du refroidissement, ce dispositif comprenant une section de refroidissement consistant en une paroi de refroidissement, une entrée et une sortie pour un fluide de refroidissement, des moyens pour faire arriver le fluide de refroidissement par l'entrée et des moyens pour décharger le fluide de refroidissement par la sortie, caractérisé en ce que l'entrée et la sortie pour le fluide de refroidissement se trouvent dans la paroi de refroidissement, qu'une partie de cette paroi de refroidissement est poreuse et que cette paroi de refroidissement est pourvue d'un élément flexible adjacent à son côté intérieur, les bords de cet élément flexible étant reliés d'une manière étanche à la paroi.

6. Un dispositif selon la revendication 5, caractérisé par une pluralité de sections de refroidissement.

7. Un dispositif selon la revendication 6, caractérisé en ce que les sections de refroidissement sont situées les unes à côté des autres.

8. Un dispositif selon la revendication 6 ou 7, caractérisé en ce que les sections de refroidissement sont situées les unes au-dessus des autres (dans une direction longitudinale).

9. Un dispositif selon l'une quelconque des revendications 5-8, caractérisé en ce que l'élément flexible est une membrane.

10. Un dispositif selon l'une quelconque des revencidations 5-9, caractérisé en ce que l'élément flexible a une forme courbe.

FIG.1

FIG. 2